(19) **Europäisches Patentamt**
**European Patent Office**
**Office européen des brevets**

(11) **EP 3 961 067 B1**

(12) # EUROPÄISCHE PATENTSCHRIFT

(45) Veröffentlichungstag und Bekanntmachung des Hinweises auf die Patenterteilung:
**25.10.2023 Patentblatt 2023/43**

(21) Anmeldenummer: **21186515.9**

(22) Anmeldetag: **19.07.2021**

(51) Internationale Patentklassifikation (IPC):
**F16H 57/04** *(2010.01)* **B60K 11/02** *(2006.01)*
**B60K 1/00** *(2006.01)*

(52) Gemeinsame Patentklassifikation (CPC):
**F16H 57/0476; B60K 1/00; F16H 57/0435; F16H 57/0473;** B60K 11/02; B60K 2001/006

(54) **KÜHLVERFAHREN FÜR EIN HYDRAULISCHES ELEMENT EINES KÜHLÖLKREISLAUFS, STEUERGERÄT, KRAFTFAHRZEUG**

COOLING METHOD FOR A HYDRAULIC ELEMENT OF A COOLING OIL CIRCUIT, CONTROL DEVICE, MOTOR VEHICLE

PROCÉDÉ DE REFROIDISSEMENT POUR UN ÉLÉMENT HYDRAULIQUE D'UN CIRCUIT D'HUILE DE REFROIDISSEMENT, APPAREIL DE COMMANDE, VÉHICULE AUTOMOBILE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2020 DE 102020210978**

(43) Veröffentlichungstag der Anmeldung:
**02.03.2022 Patentblatt 2022/09**

(73) Patentinhaber: **VOLKSWAGEN AG**
**38440 Wolfsburg (DE)**

(72) Erfinder:
• **Kalms, Dr. Rene**
**38110 Braunschweig (DE)**
• **Eichner, Susanne**
**38442 Wolfsburg (DE)**
• **Forejtek, Martin**
**50346 Trebechovicce pod Prebem (CZ)**

(56) Entgegenhaltungen:
**EP-A2- 2 053 276    DE-A1-102015 225 649**
**DE-T5-112013 003 307**

**Beschreibung**

Die Erfindung betrifft ein Kühlverfahren für ein hydraulisches Element eines Kühlölkreislaufs, ein Steuergerät und ein Kraftfahrzeug.

Um Elemente eines Kühlölkreislaufs bedarfsgerecht ansteuern zu können, ist es möglich, den Kühlölkreislauf mathematisch abzubilden oder zu beschreiben.

Hierzu gibt es verschiedene bekannte Ansätze. Beispielsweise ist aus der Patentanmeldung DE 10 2015 225 649 A1 ein Verfahren zur Steuerung und/oder Regelung eines Hydrauliksystems bekannt, in dem das Hydrauliksystem mit Hilfe von Knoten- und Maschenregeln abgebildet wird. Hieraus ergibt sich ein Gleichungssystem, bei dem jedoch nicht alle notwendigen Parameter zur Lösung des Gleichungssystems bekannt sind. Diese Parameter werden dann mit Hilfe von Kennfeldern ermittelt, was jedoch dazu führt, dass das Gleichungssystem nicht-linear wird und somit nur mit erheblichem Rechenaufwand numerisch lösbar ist, wobei weiterhin die Gefahr besteht, dass die Lösung nicht konvergiert.

Aus der Patentanmeldung EP 2 053 276 A2 ist ein Verfahren zum Steuern eines hydraulischen Leitungsdrucks in einem Hydrauliksystem bekannt. Hierfür wird ein verfügbarer Strom von einer Vielzahl an hydraulischen Pumpen ermittelt, um den hydraulischen Leitungsdruck zu bestimmen. Dieses Verfahren bildet allerdings nicht die gesamte Ölverteilung in dem Kühlölkreislauf ab.

Aus der Publikation "Sensitivitätsanalyse zur Entwicklung robuster nichtlinearer Regelungsstrategien für energieeffiziente Pumpensysteme in der Gebäudewasserversorgung von Andreas Rauh et al. ist ein Verfahren bekannt, um Gebäudewasserversorgungssysteme zu beschreiben und zu steuern. Hier wird jedoch ein nicht-linearer Ansatz verwendet, der zu einem hohen Rechenaufwand führt.

Weiterhin ist aus der DE 11 2013 003307 T5 ein Kühlverfahren für ein hydraulisches Element eines Kühlölkreislaufs eines Kraftfahrzeugs bekannt, wobei der Kühlölkreislauf zum Kühlen einer elektrischen Maschine und eines Getriebes eingerichtet ist, und wobei der Kühlölkreislauf eine Ölpumpe und ein Restdruckventil aufweist und die elektrische Maschine in das Getriebe einkoppelbar ist

Aufgabe der vorliegenden Erfindung ist es, ein Kühlverfahren für ein hydraulisches Element eines Kühlölkreislaufs, ein Steuergerät und ein Kraftfahrzeug bereitzustellen, die die oben genannten Nachteile wenigstens teilweise überwinden.

Diese Aufgabe wird durch das offenbarungsgemäße Kühlverfahren nach Anspruch 1, das Steuergerät nach Anspruch 12 und das Kraftfahrzeug nach Anspruch 13 gelöst.

Nach einem ersten Aspekt der vorliegenden Offenbarung umfasst ein Kühlverfahren für ein hydraulisches Element eines Kühlölkreislaufs eines Kraftfahrzeugs, wobei der Kühlölkreislauf zum Kühlen einer elektrischen Maschine und eines Getriebes eingerichtet ist, wobei der Kühlölkreislauf eine Ölpumpe und ein Restdruckventil aufweist, und wobei die elektrische Maschine in das Getriebe einkoppelbar ist:

Ermitteln einer Druckanforderung des hydraulischen Elements basierend auf einer Ansatzfunktion unter Berücksichtigung einer Volumenstromanforderung des hydraulischen Elements in Abhängigkeit eines Restdruckventilparameters;

Bestimmen eines Ist-Drucks an dem hydraulischen Element in Abhängigkeit des Restdruckventilparameters;

Bestimmen einer Zielfunktion basierend auf einer Differenz der Druckanforderung und des Ist-Drucks; und

Minimieren der Zielfunktion derart, dass die Zielfunktion in einem iterativen Verfahren gegen Null konvergiert zum Bestimmen eines erforderlichen Volumenstroms der Ölpumpe zum Kühlen des hydraulischen Elements.

Nach einem zweiten Aspekt der vorliegenden Offenbarung ist ein Steuergerät für ein Kraftfahrzeug, das einen Kühlölkreislauf aufweist zum Kühlen einer elektrischen Maschine und zum Kühlen eines Getriebes, wobei die elektrische Maschine in das Getriebe einkoppelbar ist, dazu eingerichtet, ein Kühlverfahren nach dem ersten Aspekt auszuführen.

Nach einem dritten Aspekt weist ein Kraftfahrzeug mit einem Kühlölkreislauf zum Kühlen einer elektrischen Maschine und zum Kühlen eines Getriebes, wobei die elektrische Maschine in das Getriebe einkoppelbar ist, ein Steuergerät nach dem zweiten Aspekt auf.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das Getriebe kann insbesondere ein Getriebe mit wenigstens einer nass laufenden Kupplung sein, vorzugsweise ein Doppelkupplungsgetriebe.

Wie bereits beschrieben, gibt es Verfahren, um einen Kühlölkreislauf eines Kraftfahrzeugs zu beschreiben. Diese Verfahren beruhen jedoch typischerweise darauf, dass Kennfelder verwendet werden, um Parameter von sich ergebenden Gleichungen zu bestimmen. Dies kann dann dazu führen, dass nicht-lineare Gleichungssysteme gelöst werden müssen, was mit einem erhöhten Rechenaufwand verbunden sein kann.

Elemente eines Kühlölsystems können als "konzentrierte Elemente" dargestellt werden, wobei Eigenschaften dieser Elemente beispielsweise von einer Öltemperatur, einer Ölviskosität, einem Volumenstrom, einem Druck, und einem Ventilansteuerstrom abhängen können. Aus einem Kennfeld, das in einem Steuergerät abgelegt ist, können solche Parameter ausgelesen werden, sodass ein aktueller Arbeitspunkt als Variable solcher Eingangsgrößen ermittelt wird. Um den Arbeitspunkt zu ermitteln, kann eine lineare Interpolationsroutine angewendet werden, was für bis zu drei unabhängige Eingangsgrößen bekannt ist. Für Doppelkupplungssteuergeräte ist jedoch keine Interpolationsroutine bekannt, die wenigstens vier Eingangsgrößen in Betracht zieht.

Mit Hilfe von Knoten- und Maschengleichungen kann ein Gleichungssystem des hydraulischen Netzwerks aufgestellt werden, aus denen beispielsweise ein Druck oder ein Volumenstrom einzelner Elemente hergeleitet werden kann. Anhand von Kennfeldern und von Interpolationsroutinen für die Kennfelder kann der ermittelte Druck an dem Element in einen Volumenstrom durch das Element (oder umgekehrt mit einem inversen Kennfeld) umgerechnet werden. Die hydraulischen Elemente sind jedoch typischerweise nicht-lineare Widerstände, sodass sich ein nicht-lineares Gleichungssystem ergibt, was iterativ gelöst werden muss, wobei die Elemente jedoch für jeden Rechenschritt aus den Kennfeldern neu bestimmt werden müssen.

Deshalb kann ein solches Verfahren als rechenaufwendig angesehen werden. Des Weiteren wird in bekannten Verfahren versucht, die nicht-linearen Gleichungssysteme zu linearisieren. Dafür dürfen Stützstellen jedoch nicht zu weit auseinander liegen, was zu einer Vergrößerung der Kennfelder führen kann und somit zu einer Vergrößerung des Speicherbedarfs je Kennfeld (für jedes hydraulische Element).

Da solche Verfahren iterativ erfolgen, besteht die Gefahr, dass entweder sehr viele Iterationen notwendig sind oder dass das Verfahren nicht konvergiert (bspw. an einem Kennfeldpunkt, in dem eine Funktion, die von dem Kennfeld abgebildet wird, nicht differenzierbar und/oder unstetig ist, bspw. indem die Funktion einen Knick und/oder eine Sprungstelle aufweist).

Zusammenfassend besteht bei bekannten Verfahren die Gefahr, dass unerwünscht viel Speicher, Rechenleistung und/oder Rechenzeit aufgewendet werden muss.

Es wurde erkannt, dass zwei Aufgaben gelöst werden müssen, um hydraulische Stellglieder bedarfsgerecht ansteuern zu können. Zum einen muss eine bedarfsgerechte Soll-Ansteuerung einer Ölpumpe und eines Kühlölventils zum Kühlen von Kupplungen ermittelt werden und zum anderen müssen die tatsächlichen Volumenströme ermittelt werden, sodass diese nicht aus Kennfeldern hergeleitet werden müssen. Die tatsächlichen Volumenströme können dann wiederum als Eingangsgrößen für andere Module verwendet werden (bspw. für ein Kupplungstemperaturmodell).

Hydraulische Elemente des Kühlölkreislaufs können hierbei als eine Kombination aus einer laminaren und turbulenten Strömung (innerhalb eines vorgegebenen Temperaturbereichs) beschrieben werden. Es wurde erkannt, dass eine Ansatzfunktion die hydraulischen Elemente des Kühlölkreislaufs hinreichend genau abbilden kann, sodass die Berechnung der komplexen nicht-linearen Gleichungssysteme umgangen werden kann.

Solche Gleichungssysteme können entstehen, wenn übliche (bekannte) Beschreibungsfunktionen für die hydraulischen Elemente genutzt werden.

Weiterhin wurde erkannt, dass ein Gleichungssystem, das den Kühlölkreislauf beschreibt, effizienterweise als eine Reihe von Einzelgleichungen dargestellt werden kann, die sequentiell aufeinander aufbauend gelöst werden können. Dies ist auch dem Umstand geschuldet, dass erkannt wurde, dass die einzelnen hydraulischen Elemente gegenseitig ihren Ölverbrauch beeinflussen.

Es wurde außerdem erkannt, dass eine Lösung von sich ergebenden Gleichungen, die den Kühlölkreislauf beschreiben, hinreichend schnell gefunden werden muss, d.h. also dass wenige Iterationen nötig sind, um die Lösung der Gleichungen anzunähern oder zu lösen.

Des Weiteren wurde erkannt, dass es ineffizient sein kann, Kennfelder zu verwenden, da Lösungen von Gleichungen nicht zwangsweise konvergieren, insbesondere wenn eine Unstetigkeit in dem Kennfeld vorliegt. Gemäß der vorliegenden Offenbarung müssen keine Kennfelder verwendet werden, sondern es ist ausreichend, dass in dem Steuergerät für jedes hydraulische Element lediglich Parameter für die Ansatzfunktion in einem Speicher abgelegt werden.

Deshalb betreffen manche Ausführungsbeispiele ein Kühlverfahren für ein hydraulisches Element eines Kühlölkreislaufs eines Kraftfahrzeugs, wobei der Kühlölkreislauf zum Kühlen einer elektrischen Maschine und eines Getriebes eingerichtet ist, wobei der Kühlölkreislauf eine Ölpumpe aufweist, und wobei die elektrische Maschine in das Getriebe einkoppelbar ist, das Kühlverfahren umfassend: Ermitteln einer Druckanforderung des hydraulischen Elements basierend auf einer Ansatzfunktion unter Berücksichtigung einer Volumenstromanforderung des hydraulischen Elements in Abhängigkeit eines Restdruckventilparameters; Bestimmen eines Ist-Drucks an dem hydraulischen Element in Abhängigkeit des Restdruckventilparameters; Bestimmen einer Zielfunktion basierend auf einer Differenz der Druckanforderung und des Ist-Drucks; und Minimieren der Zielfunktion derart, dass die Zielfunktion in einem iterativen Verfahren gegen Null konvergiert zum Bestimmen eines erforderlichen Volumenstroms der Ölpumpe zum Kühlen des hydraulischen Elements.

Der Kühlölkreislauf kann einen von mehreren Kühlölkreisläufen in dem Kraftfahrzeug darstellen. Beispielsweise kann ein anderer Kühlölkreislauf eine Verbrennungskraftmaschine des Kraftfahrzeugs kühlen. Prinzipiell kann es aber vorgesehen sein, dass ein Kühlölkreislauf gemäß der vorliegenden Offenbarung alle maßgeblichen Elemente des Kraftfahrzeugs kühlt, zumindest jedoch das Getriebe und die elektrische Maschine. Weiterhin kann mit einem offenbarungsgemäßen Kühlölkreislauf auch eine Batterie gekühlt werden, ein Radsatz geschmiert werden, und dergleichen.

Der Kühlölkreislauf kann eine Ölpumpe aufweisen und kann derart verzweigt sein, dass dem zu kühlenden hydraulischen Element Öl zugeführt wird, in Reaktion auf einen durch die Ölpumpe fließenden Ölstrom.

Ein hydraulisches Element kann in diesem Zusammenhang ein beliebiges Bauteil in dem Kühlölkreislauf sein, das mit Öl gekühlt wird. Insofern stellt ein hydraulisches Element einen hydraulischen Widerstand dar, an dem Öldruck abfallen kann, und durch den ein gewisser Volumenstrom fließt.

Solch ein Kühlölkreislauf kann ein Restdruckventil aufweisen, welches dazu eingerichtet ist, einen möglichen zu hohen Druck in dem Kühlölkreislauf abzubauen. Hierfür kann es als Überdruckventil eingerichtet sein, das bei einem Übersteigen eines definierten Drucks dazu eingerichtet ist, zu öffnen, sodass überschüssiges Öl an die Ölpumpe rückgeführt wird.

Generell ist es wünschenswert, jedes hydraulische Element bedarfsgerecht mit Öl zu versorgen. Gemäß der vorliegenden Offenbarung kann die aktuelle Ölverteilung, damit auch ein Ist-Druck an einem hydraulischen Element, basierend auf einem Zustand des Restdruckventils (offen oder geschlossen) bestimmt werden.

Hierfür wird gemäß der vorliegenden Offenbarung eine Druckanforderung des hydraulischen Elements bestimmt.

In manchen Ausführungsbeispielen liegt jedoch ein Volumenstromwunsch des hydraulischen Elements vor, der beispielsweise durch eine Sensorik für das jeweilige hydraulischen Element bestimmt wird. Solche hydraulischen Elemente sind beispielsweise die beiden Kupplungen des Getriebes, die elektrische Maschine, eine weitere Kupplung, mit der die elektrische Maschine in das Getriebe eingekoppelt werden kann, und ein Räderkasten.

Beispielsweise wird der Ölbedarf der Kupplungen aus Kupplungsmomenten bestimmt, die aus Kupplungsdrücken in den Kupplungen und aus Differenzdrehzahlen der Kupplungen bestimmt werden. Die jeweiligen Kupplungsdrücke (hier sind Drücke innerhalb der Kupplung gemeint, und nicht der Druck in dem Kühlölkreislauf) können aus einer Drucksensorik bestimmt werden. Die Differenzdrehzahlen können mit Differenzdrehzahlsensoren (bspw. durch mehrere Drehzahlsensoren auf verschiedenen Wellen, mit Hilfe derer die Drehzahldifferenzen ermittelt werden) bestimmt werden. Aus diesen Größen kann eine Reibleistung der Kupplungen bestimmt werden, die indikativ für einen notwendigen Kühlölvolumenstrom ist.

Gemäß der vorliegenden Offenbarung kann solch ein Volumenstromwunsch mit Hilfe der Ansatzfunktion in einen Druck umgerechnet werden.

In einem Ausführungsbeispiel, kann die Ansatzfunktion für den Volumenstrom folgendermaßen dargestellt werden, wenn der Druck bekannt ist:

$$Q = V*A*P/(1+A*P/Q_{Pol})$$

Q bezeichnet den Volumenstrom durch die Komponente.

P bezeichnet die Druckdifferenz über der Komponente.

V bezeichnet eine aktuelle Ventilstellung, die zwischen Null (geschlossen) und Eins (offen) liegt (ohne die vorliegende Offenbarung darauf zu beschränken), wobei jede Komponente als Verbraucher, d.h. als Drossel oder Blende angenommen werden kann (oder als idealisierte Mischform).

A bezeichnet einen hydraulischen Leitwert der Komponente. A kann berechnet werden als $A = a_o + a_i*T$, für eine Komponente mit konstanter Ventilstellung (also $V=1$), oder als $A =a_0/(1+(V-1)/b_0) + a_1*T/(1+(V-1)/b_1)$, für eine Komponente mit variabler Ventilstellung (also V zwischen Null und Eins). $a_0$, $a_1$, $b_0$ und $b_1$ sind hier als Parameter festgelegt, um die Komponente zu beschreiben. T ist die Öltemperatur.

$Q_{Pol}$ bezeichnet eine Polstelle des Volumenstroms, d.h. der Volumenstrom, der durch die Komponente fließen würde, wenn eine (theoretische) unendliche Druckdifferenz über der Komponente vorliegen würde.

Somit beschreibt die Ansatzfunktion ein hydraulisches Element des Kühlölkreislaufs als nicht-linearen hydraulischen Widerstand.

In manchen Ausführungsbeispielen bleibt bei einem Erreichen des Volumenschwellschwerts der Ölpumpe das Restdruckventil des Kühlölkreislaufs geschlossen, und öffnet bei einer Überschreitung des maximalen Volumenstroms, wie bereits beschrieben.

Um den Druck anhand des Volumenstroms zu bestimmen, kann die Gleichung nach P umgekehrt werden, sodass $P=(Q/A)/(V-Q/Q_{Pol})$.

Um von einem Druck in einen Volumenstrom oder umgekehrt umrechnen zu können, müssen also die notwendigen Parameter, die für das jeweilige hydraulische Element einzigartig sein können, bestimmt werden.

Dies kann mit einem Steuerverfahren oder einem Bestimmungsverfahren geschehen, welches umfasst: Blockieren wenigstens einer Verzweigung des Kühlölkreislaufs; Steuern einer Ölpumpe des Kühlölkreislaufs, sodass übrige Verzweigungen mit Öl versorgt werden; und Messen des Ölparameters an vorbestimmten Stellen des Kühlölkreislaufs zur Bestimmung des Ölparameters für das hydraulische Element.

Um den Volumenstrom bei einem bekannten Druck über das hydraulische Element (also ein Druck vor dem hydraulischen Element im Vergleich zu nach dem hydraulischen Element in oder gegen Ölflussrichtung) zu bestimmen, müssen also die Parameter A, V, und $Q_{Pol}$ bekannt sein. Um den Parameter A zu bestimmen, müssen weiterhin $a_0$, $a_1$, $b_0$, $b_1$, und T bekannt sein, die mit einem Steuerverfahren gemäß der vorliegenden Offenbarung zu bestimmen sind.

Da V eine aktuelle Ventilstellung bezeichnet, kann der Wert für V eingestellt werden. Genauso kann die Öltemperatur T eingestellt werden. Diese Parameter werden im weiteren auch Ölkreislaufparameter genannt, welche varriert werden, um die übrigen Parameter (A, $a_0$, $a_1$, $b_0$, $b_1$ und $Q_{Pol}$) zu bestimmen. Dies hat, in manchen Ausführungsbeispielen, den Grund, dass die gesuchten Parameter mit der Ventilstellung und/oder der Öltemperatur varrieren können, und daher nicht als konstant angenommen werden können.

Deshalb umfasst das Steuerverfahren ferner: Variieren eines Ölkreislaufparameters zum Bestimmen des Ölparameters in Abhängigkeit des Ölkreislaufparameters.

So kann der Druck bzw. der Volumenstrom für verschiedene Temperaturen und/oder Ventilstellungen bestimmt werden.

Ein Kühlölkreislauf gemäß der vorliegenden Offenbarung kann eine Vielzahl von Verzweigungen aufweisen. Beispielsweise können mehrere hydraulische Elemente des Kühlölkreislaufs parallel oder in Reihe geschaltet sein, wie es beispielsweise von einem elektrischen Netzwerk bekannt ist. Diese Darstellungsweise erlaubt es, den Kühlölkreislauf als Knoten- und Maschennetzwerk darzustellen mit den dem elektrischen Netzwerk analogen Regeln, wie zum Beispiel, dass an einem Knoten des Kühlölkreislaufs Volumenstromerhaltung gilt und innerhalb einer Masche Druckerhaltung.

Eine Verzweigung gemäß der vorliegenden Offenbarung kann dann einen Knoten, eine Masche oder eine Kombination von beiden umfassen (bspw. als mehrere parallele Maschen, sodass mindestens zwei Knoten vorhanden sind).

Das Steuerverfahren umfasst, in manchen Ausführungsbeispielen: Blockieren wenigstens einer Verzweigung des Kühlölkreislaufs. Beispielsweise kann ein Ölfluss innerhalb wenigstens einer Masche oder durch wenigstens einen Knoten blockiert werden.

In manchen Ausführungsbeispielen werden alle Verzweigungen blockiert, bis auf eine, sodass Öl nur durch das hydraulische Element fließt, für das die Parameter der Ansatzfunktion bestimmt werden sollen (d.h. die Parameter der Ansatzfunktion sind weiterhin abhängig von dem hydraulischen Element, bspw. kann eine Drossel andere Eigenschaften haben als eine Blende, sodass sich andere Parameter der Ansatzfunktion ergeben).

Das heißt, in manchen Ausführungsbeispielen werden also von der Vielzahl der Verzweigungen bis auf eine Verzweigung alle blockiert.

So kann sichergestellt werden, dass andere Verbraucher die Messung für das hydraulische Element nicht verfälschen.

Wie bereits diskutiert, können mehrere parallele Ölkanäle (Maschen, Verzweigungen), offen gelassen werden, beispielsweise wenn von schon einen hydraulischen Widerstand eines ersten Ölkanals kennt und der hydraulische Widerstand in einem parallelen zweiten Ölkanal spezielle Eigenschaften hat, die nur in Zusammenhang mit dem hydraulischen Widerstand des ersten Ölkanals auftreten, bspw. bei einer Druckrückführung auf ein Restdruckventil.

Das Blockieren kann mit einer Blockiervorrichtung, beispielsweise mit einem Ventil, einer Blende, einem Stopfen, und dergleichen durchgeführt werden.

Ist die wenigstens eine Verzweigung blockiert, kann eine Ölpumpe des Kühlölkreislaufs angesteuert werden, sodass ein Ölfluss durch den Kühlölkreislauf stattfindet (abgesehen von den blockierten Verzweigungen).

Sind alle bis auf eine Verzweigung blockiert, kann so Öl durch das hydraulische Element fließen, für welches die Parameter der Ansatzfunktion bestimmt werden sollen.

Dann kann der Ölparameter, d.h. der Volumenstrom durch und der Druck über das hydraulische Element gemessen werden.

Verschiedene Parameter können dann variiert werden, wie bereits beschrieben, damit genügend Daten vorhanden sind, um alle Parameter zu bestimmen. Beispielsweise kann ein Gleichungssystem aufgestellt werden, welches (mindestens) so viele Gleichungen hat wie die gesuchten Parameter, welches dann gelöst werden kann.

In anderen Worten: In manchen Ausführungsbeispielen umfasst das Steuerverfahren ferner: Bestimmen des Parameters der Ansatzfunktion basierend auf wenigstens dem Ölparameter für das hydraulische Element.

In manchen Ausführungsbeispielen umfasst der Ölparameter wenigstens eines von Ölvolumenstrom durch das hydraulische Element und Öldruck über das hydraulische Element, wie bereits beschrieben.

Von einer Volumenstromanforderung des hydraulischen Elements wird mit Hilfe der Ansatzfunktion auf eine Druckanforderung geschlossen. Dies kann für beliebig viele der hydraulischen Elemente der Kühlölkreislaufs geschehen. Da Drücke jedoch typischerweise relative Größen sind (also Druckdifferenzen), wird die Druckanforderung in Abhängigkeit eines Restdruckventilparameters als Bezugspunkt ermittelt. Das heißt, eine Druckdifferenz über das hydraulische Element bezüglich eines Restdruckventils des Kühlölkreislaufs wird bestimmt. Dies kann für alle hydraulischen Elemente des Kühlölkreislaufs geschehen, damit die ermittelten Drücke vergleichbar sind. In anderen Worten: Um einen Volumenstrom durch ein Element fließen zu lassen, wird eine Druckdifferenz über diesem Element benötigt. Diese Druckdifferenz wird anschließend auf einen erforderlichen Druck am Restdruckventil umgerechnet, der die erforderliche Druckdifferenz unter Berücksichtigung der anderen hydraulischen Elemente des Kühlölkreislaufs sicherstellt.

Der Druck an dem Restdruckventil kann bestimmt werden, indem zunächst festgestellt wird, ob das Restdruckventil geöffnet oder geschlossen ist.

Ist das Restdruckventil geöffnet, dann entspricht der Druck dem maximalen Druck, bevor das Restdruckventil öffnet. Ist das Restdruckventil geschlossen, kann aber der Volumenstrom an dem Restdruckventil bekannt sein (beispielsweise Null), sodass mit der Ansatzfunktion der Druck vor dem Restdruckventil ermittelt werden kann.

Des Weiteren wird gemäß der vorliegenden Offenbarung ein Ist-Druck an dem hydraulischen Element in Abhängigkeit des Restdruckventilparameters bestimmt (d.h. die Druckdifferenz zwischen dem Element und dem Restdruckventil).

Um eine optimale Steuerung der Ölpumpe zu gewährleisten, d.h. nicht zu wenig Öl, aber auch nicht zu viel Öl bereitzustellen, ist es wünschenswert, dass der Ist-Druck der Druckanforderung entspricht.

Um dies zu überprüfen, wird eine Zielfunktion basierend auf einer Differenz der Druckanforderung und des Ist-Drucks bestimmt. Bei einer optimalen Steuerung der Pumpe, sollte diese Zielfunktion idealerweise Null sein. Ist dies nicht der Fall, wird die Zielfunktion minimiert und die erhaltenen Parameter für die optimale Ansteuerung der Pumpe werden verwendet.

Die Minimierung erfolgt in manchen Ausführungsbeispielen mit einem iterativen Verfahren, bei dem die Zielfunktion gegen Null konvergiert.

Damit kann dann der Volumenstrom der Ölpumpe bestimmt werden, der erforderlich ist, um das hydraulische Element zu kühlen.

In manchen Ausführungsbeispielen beschreibt die Ansatzfunktion das hydraulische Element als nichtlinearen Widerstand, wie bereits beschrieben.

In manchen Ausführungsbeispielen umfasst das Kühlverfahren ferner: Steuern der Ölpumpe derart, dass wenigstens die Druckanforderung an dem hydraulischen Element erreicht wird.

Somit kann auch die Druckanforderung an dem hydraulischen Element überstiegen werden.

Jedoch kann es in manchen Ausführungsbeispielen nicht möglich sein, dass alle hydraulischen Elemente ihren Druck aus der Druckanforderung auch zur Verfügung gestellt bekommen, weil beispielsweise der Kühlölkreislauf nicht dazu ausgelegt ist, eine genaue Regelung von Ventilen, Blenden, und dergleichen bereitzustellen. Deshalb wird, in manchen Ausführungsbeispielen, das Kühlverfahren für das hydraulische Element abhängig von einer Priorität des hydraulischen Elements ausgeführt.

Beispielsweise kann es mehrere Anforderer geben (eine Teilmenge der hydraulischen Elemente), wie zum Beispiel Kupplungen, Radsatzschmierungen, die elektrische Maschine, und dergleichen. Jedes dieser Elemente kann eine Volumenstromanforderung stellen. Jedoch kann die Kühlung eines einzelnen Elements als wichtiger erachtet werden als die Kühlung aller (anderen), sodass dieses Element priorisiert wird. Die Priorisierung kann auch nach anderen technischen Randbedingungen erfolgen, wie zum Beispiel verfügbares Öl, Pumpleistung der Ölpumpe, Fahrtgeschwindigkeit, Außentemperatur, Fahrmodus, und dergleichen.

Hat das hydraulische Element oberste Priorität (bspw. ist vorstellbar, dass die Doppelkupplung oberste Priorität hat, ohne die vorliegende Offenbarung darauf zu beschränken), dann wird, in manchen Ausführungsbeispielen, das Verfahren für genau dieses hydraulische Element ausgeführt, während die anderen hydraulischen Elemente mit dem restlichen Öl versorgt werden. Hierbei kann ein zu hoher oder zu niedriger Volumenstrom an dem jeweiligen hydraulischen Element vorliegen. Es können auch mehrere hydraulische Elemente die gleiche Priorität haben, sodass es möglich ist, dass bei der Minimierung der Zielfunktion beispielsweise eine durchschnittliche Druckanforderung der mehreren Elemente oder dergleichen verwendet wird.

Gemäß der vorliegenden Offenbarung kann die aktuelle Ölverteilung, damit auch der Ist-Druck an dem hydraulischen Element, basierend auf einem Zustand des Restdruckventils (offen oder geschlossen) bestimmt werden.

Ist das Restdruckventil offen, ist der Druck bekannt, der vor dem Restdruckventil anliegt. Dies ist der maximale Druck, bei dem das Restdruckventil öffnet. Wünschenswert kann zunächst dann sein, den Volumenstrom des Öls durch das Restdruckventil zu kennen.

In manchen Ausführungsbeispielen werden alle auf das Restdruckventil bezogenen Anforderungsdrücke auf den Druck begrenzt, bei dem das Restdruckventil gerade öffnen würde, da bei einem Überschreiten dieses Druckes das zusätzlich geförderte Öl ohne Nutzen über das Restdruckventil abfließen würde.

Ist das Restdruckventil geschlossen, ist der Druck vor dem Restdruckventil nicht bekannt, und es kann wünschenswert sein, diesen zu kennen. Jedoch kann durch eine Pumpleistung der Ölpumpe (bspw. anhand einer Drehzahl), auf einen Volumenstrom geschlossen werden, der an dem Restdruckventil vorbei fließt.

Anhand von Knoten und Maschen, mit denen der Kühlölkreislauf modelliert werden kann, kann auf die Ölverteilung geschlossen werden. An einem Knoten im Kühlölkreislauf wird, in manchen Ausführungsbeispielen, Volumenstromerhaltung angenommen, also die Summe aller eingehenden Volumenströme ist gleich der Summe aller ausgehenden Volumenströme. Innerhalb einer Masche des Kühlölkreislaufs wird dann Öldruckerhaltung angenommen, d.h. die Summe aller Drücke, bezogen auf die jeweilige Fließrichtung des Öls (um auch negative Drücke zu erhalten), ist Null.

Wenn also der Druck vor dem Restdruckventil bekannt ist, kann eine Maschengleichung aufgestellt werden, die die Drücke aller hydraulischen Elemente in Bezug zueinander setzt, mit der Bedingung, dass der Gesamtdruck (in jeder Masche, unter Berücksichtigung der Fließrichtung) Null sein muss.

Ist der Volumenstrom am Restdruckventil bekannt, kann eine Knotengleichung aufgestellt werden, die alle ein- und ausfließenden Ölströme an den betreffenden Knoten des Restdruckventils umfasst.

Diese Vorgehensweise führt zu einem Gleichungssystem, um alle Volumenströme bzw. alle Drücke auszurechnen. Solch ein Gleichungssystem ist jedoch in einem hinreichend komplexen Kühlölkreislauf typischerweise nur lösbar, wenn für bestimme hydraulische Elemente der Druck in einen Volumenstrom bzw. der Volumenstrom in einen Druck umgerechnet werden kann, da sonst das Gleichungssystem unterbestimmt ist.

Deshalb wird, in manchen Ausführungsbeispielen der vorliegenden Offenbarung, zunächst ein Volumenschwellwert für die Ölpumpe bestimmt.

Dieser Volumenschwellwert repräsentiert den Volumenstrom, den die Ölpumpe maximal leisten darf, damit das Restdruckventil geschlossen bleibt.

Außerdem kann ein Ist-Volumenstrom für die Ölpumpe bestimmt werden. Dieser Ist-Volumenstrom kann dem tatsächlichen Volumenstrom entsprechen, den die Ölpumpe fördert, und kann beispielsweise anhand einer Drehzahl der Ölpumpe bestimmt werden, ohne die vorliegende Offenbarung darauf zu beschränken, da beispielsweise auch ein Durchflusssensor vorgesehen sein kann, der den Volumenstrom misst.

Der Volumenstromschwellwert wird, in manchen Ausführungsbeispielen, mit dem Ist-Volumenstrom der Ölpumpe verglichen. Aus dem Vergleich kann eine rein binäre Aussage resultieren, bspw. dass der Ist-Volumenstrom höher oder niedriger als der Volumenstromschwellwert ist. Es kann auch eine quantitative Aussage getroffen werden, bspw. wie weit der Ist-Volumenstrom von dem Volumenstromschwellwert abweicht.

Dies kann dazu dienen, um zu bestimmen, ob sich das Restdruckventil in einem offenen oder geschlossenen Zustand befindet. Ist der Ist-Volumenstrom kleiner oder gleich dem Volumenstromschwellwert, kann daraus geschlossen werden, dass das Restdruckventil geschlossen ist. Ist der Ist-Volumenstrom größer als der Volumenstromschwellwert, kann daraus geschlossen, dass das Restdruckventil offen ist.

Aus diesem Zustand heraus, kann dann entweder der Druck am Restdruckventil (Restdruckventildruck) oder der Volumenstrom durch das Restdruckventil (Restdruckventilvolumenstrom) als erster Restdruckventilparameter bestimmt werden, wie bereits beschrieben.

In bekannten Verfahren kann der Restdruckventildruck oder der Restdruckventilvolumenstrom in die jeweils andere Größe (Restdruckventilvolumenstrom oder Restdruckventildruck, fortan als "zweiter Restdruckventilparameter" bezeichnet) umgewandelt werden, indem Kennfelder verwendet werden. Dies kann jedoch dazu führen, dass komplexe, hochgradig nicht-lineare Gleichungssysteme entstehen, die nur mit erheblichem Aufwand numerisch lösbar sind, und für die ein typischer Prozessor eines Steuergeräts eines Kraftfahrzeugs nicht ausgelegt sein könnte.

Deshalb wird gemäß der vorliegenden Offenbarung der zweite Restdruckventilparameter basierend auf einer Ansatzfunktion unter Berücksichtigung des ersten Restdruckventilparameters ermittelt, damit die Ölverteilung im Kühlölkreislauf bestimmt werden kann.

Ist der Druck vor dem Restdruckventil bekannt, kann mit Hilfe der Ansatzfunktion gemäß der vorliegenden Offenbarung, dieser direkt in den Volumenstrom umgerechnet werden. Ist der Volumenstrom bekannt, kann dieser direkt in einen Druck umgerechnet werden.

Dies führt dazu, dass die Ölverteilung (d.h. die Drücke und die Volumenströme) an den hydraulischen Elementen in dem Kühlölkreislauf als eine Reihe von Gleichungen dargestellt werden kann, die von dem Druck bzw. dem Volumenstrom an dem Restdruckventil abhängen. Die Ansatzfunktion kann jedoch zur Umrechnung von Druck in Volumenstrom oder umgekehrt für jedes hydraulische Element verwendet werden.

Deshalb umfasst das Kühlverfahren, genauer gesagt das Bestimmen des Ist-Drucks an dem hydraulischen Element, ferner: Bestimmen eines Volumenstromschwellwerts für die Ölpumpe; Bestimmen eines Ist-Volumenstroms der Ölpumpe; Vergleichen des Volumenstromschwellwerts mit dem Ist-Volumenstrom zum Ermitteln eines ersten Restdruckventilparameters; und Ermitteln eines zweiten Restdruckventilparameters basierend auf der Ansatzfunktion unter Berücksichtigung des ersten Restdruckventilparameters zum Bestimmen des Ist-Drucks an dem hydraulischen Element.

Die hierbei verwendete Ansatzfunktion kann die gleiche Ansatzfunktion wie bereits beschrieben umfassen, wobei die betreffenden Parameter ($A$, $V$, $Q_{Pol}$) auf das Restdruckventil angepasst sind.

In manchen Ausführungsbeispielen umfasst das Kühlverfahren ferner: Begrenzen des Volumenstroms der Ölpumpe auf den Volumenstromschwellwert.

So kann sichergestellt werden, dass das Restdruckventil geschlossen bleibt und kein Öl an die Ölpumpe rückgeführt werden muss, was insgesamt zu einer erhöhten Pumpleistung der Ölpumpe sowie zu einer Erhöhung des Gesamtdrucks in dem Kühlölkreislauf führen würde.

In manchen Ausführungsbeispielen umfasst der erste Restdruckventilparameter eines von Restdruckventildruck oder Restdruckventilvolumenstrom, wie bereits beschrieben.

In manchen Ausführungsbeispielen umfasst der zweite Restdruckventilparameter einen Restdruckventildruck, wenn der erste Restdruckventilparameter der Restdruckventilvolumenstrom ist, und der zweite Restdruckventilparameter umfasst einen Restdruckvolumenstrom, wenn der erste Restdruckventilparameter der Restdruckventildruck ist, wie hierin beschrieben.

Generell muss bei der Minimierung der Zielfunktion Null nicht erreicht werden, sondern das Ergebnis nach einer vorgegebenen Anzahl von Iterationen unterhalb eines vorgegebenen Grenzwerts liegen, da beispielsweise bei einem numerischen Verfahren unendlich viele Schritte nötig sein könnten. Es kann beispielsweise eine Abbruchgrenze definiert werden, nachdem ein Wert (nahe Null) erreicht ist. Durch die Verwendung der Ansatzfunktion kann ein iteratives Verfahren gemäß der vorliegenden Offenbarung nach zwei Iterationen hinreichend genau sein.

In manchen Ausführungsbeispielen umfasst das iterative Verfahren ein Gradientenverfahren, wie zum Beispiel ein Newtonverfahren oder ein Sekantenverfahren oder eine Mischung von beiden.

Beispielsweise kann eine Iteration des Newtonverfahrens und nach Bedarf eine Iteration des Sekantenverfahrens verwendet werden, ohne die vorliegende Offenbarung darauf zu beschränken.

Somit kann ein Bestimmungsverfahren gemäß der vorliegenden Offenbarung in einem üblichen Steuergerät leistungseffizient ausgeführt werden.

Manche Ausführungsbeispiele betreffen ein Steuergerät für ein Kraftfahrzeug, das einen Kühlölkreislauf aufweist zum Kühlen einer elektrischen Maschine und zum Kühlen eines Getriebes eingerichtet ist, wobei die elektrische Maschine in das Getriebe einkoppelbar ist, wobei das Steuergerät dazu eingerichtet ist, ein Kühlverfahren gemäß der vorliegenden Offenbarung auszuführen, wie hierin beschrieben.

Wie bereits diskutiert, kann ein handelsübliches Steuergerät ein solches Verfahren also ausführen, ohne dass hardwareseitige Modifikationen notwendig sind. Somit können Kosten eingespart werden und notwendige Prozessorkapazität zum Bestimmen einer Ölverteilung kann reduziert werden.

Manche Ausführungsbeispiele betreffen ein Kraftfahrzeug, das einen Kühlölkreislauf aufweist zum Kühlen einer elektrischen Maschine und zum Kühlen eines Getriebes eingerichtet ist, wobei die elektrische Maschine in das Getriebe einkoppelbar ist, wobei das Kraftfahrzeug ferner ein Steuergerät gemäß der vorliegenden Offenbarung aufweist.

Manche Ausführungsbeispiele betreffen einen Kühlölkreislauf für ein Kraftfahrzeug, der zum Kühlen einer elektrischen Maschine und zum Kühlen eines Getriebes eingerichtet ist, wobei die elektrische Maschine in das Getriebe einkoppelbar ist, und wobei der Kühlölkreislauf eine Vielzahl von Verzweigungen aufweist, der Kühlölkreislauf ferner umfassend: eine Vielzahl von Blockiervorrichtungen, um wenigstens eine Verzweigung des Kühlölkreislaufs zu blockieren, um einen Parameter der Ansatzfunktion zu bestimmen, wie hierin diskutiert.

Dieser Kühlölkreislauf kann ein speziell zur Ermittlung der Parameter der Ansatzfunktion eingerichteter Kühlölkreislauf sein und nur auf einem Prüfstand Anwendung finden, um die Parameter zu ermitteln. Die Parameter können dann in einem Speicher eines Steuergeräts abgelegt sein, und es ist bei einem Ausführen des Kühlverfahrens nicht notwendig, dass ein solcher Kühlölkreislauf mit Blockiervorrichtungen vorhanden ist.

In manchen Ausführungsbeispielen umfasst der Kühlölkreislauf ferner: eine Vielzahl von Ölparametermessvorrichtungen zum Messen eines Ölparameters an vorbestimmten Stellen des Kühlölkreislaufs zur Bestimmung des Ölparameters für ein hydraulisches Element des Kühlölkreislaufs.

Die Ölparametermessvorrichtungen können Druckmessvorrichtungen sein, die dazu eingerichtet sind, einen Öldruck zu messen, und/oder Volumenstrommessvorrichtungen, um einen Volumenstrom zu messen. Druckmessvorrichtungen können beispielsweise parallel zu einer Masche angeordnet sein, während Volumenstrommessvorrichtungen, in manchen Ausführungsbeispielen, an einem Knoten oder vor oder hinter einem hydraulischen Element vorgesehen sind.

Wenn Volumenstrommessvorrichtungen an Knoten vorgesehen sind, muss nicht für jedes hydraulische Element eine eigene Volumenstrommessvorrichtung vorhanden sein. Des Weiteren kann für jede parallele Masche eine eigene Druckmessvorrichtung vorhanden sein, sodass eine Anzahl an Druckmessvorrichtungen limitiert werden kann und nicht für jedes Element eine einzelne Messung stattfinden muss, oder dass bei Messungen für verschiedene hydraulische Elemente die Positionen von Messvorrichtungen nicht verändert werden müssen.

In manchen Ausführungsbeispielen wird nur ein Volumenstrommesser für den ganzen Ölkreislauf verwendet, wie zum Beispiel eine elektrische Ölpumpe, wobei man den Volumenstrom durch die Ölpumpe entweder direkt ablesen kann oder bspw. aus der Drehzahl schließen kann. Sind alle Maschen bis auf eine blockiert, wobei die Masche keine weiteren Knoten aufweist, und die elektrische Ölpumpe befindet sich in der nicht blockierten Masche (was typischerweise so vorgesehen ist, da sonst kein Ölfluss und damit kein Volumenstrom durch einen hydraulischen Widerstand möglich ist), ist der Volumenstrom durch den hydraulischen Widerstand (bzw. durch alle hydraulischen Widerstände der Masche) gleich dem Volumenstrom der Ölpumpe. Somit ist der Volumenstrom durch jeden hydraulischen Widerstand der Masche bekannt.

Ausführungsbeispiele der Erfindung werden nun beispielhaft und unter Bezugnahme auf die beigefügte Zeichnung beschrieben, in der:

Fig. 1 schematisch ein Ausführungsbeispiel eines Kraftfahrzeugs gemäß der vorliegenden Offenbarung in einem Blockdiagramm darstellt;

Fig. 2 ein Schaltbild eines Kühlölkreislaufs gemäß der vorliegenden Offenbarung zeigt;

Fig. 3 ein Kühlverfahren gemäß der vorliegenden Offenbarung in einem Blockdiagramm zeigt;

Fig. 4 ein weiteres Ausführungsbeispiel eines Kühlverfahrens gemäß der vorliegenden Offenbarung in einem Blockdiagramm zeigt;

Fig. 5 einen Graphen mit verschiedenen Simulationen für die Ansatzfunktion zeigt;

Fig. 6 einen weiteren Graphen mit verschiedenen Simulationen für die Ansatzfunktion zeigt;

Fig. 7 einen weiteren Graphen mit verschiedenen Simulationen für die Ansatzfunktion zeigt; und

Fig. 8 ein weiteres Ausführungsbeispiel eines Kühlverfahrens gemäß der vorliegenden Offenbarung in einem Blockdiagramm zeigt.

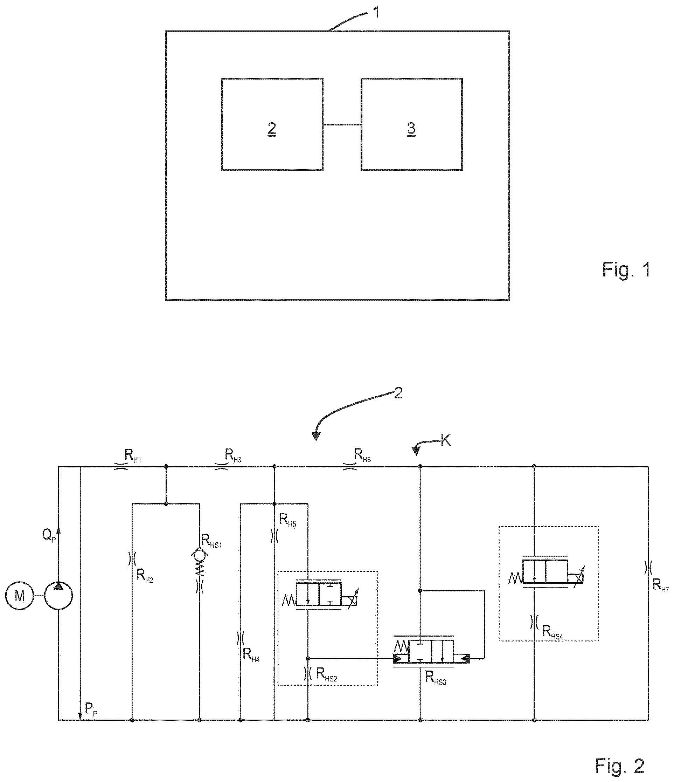

Ein Ausführungsbeispiel eines Kraftfahrzeugs 1 gemäß der vorliegenden Offenbarung ist in Fig. 1 schematisch in einem Blockdiagramm dargestellt.

Das Kraftfahrzeug 1 weist einen Kühlölkreislauf 2 auf, der dazu eingerichtet eine elektrische Maschine und ein Doppelkupplungsgetriebe zu kühlen. Die elektrische Maschine ist dabei in das Doppelkupplungsgetriebe einkoppelbar, wie hierin beschrieben.

Außerdem weist das Kraftfahrzeug ein Steuergerät 3 auf, das dazu eingerichtet ist, ein Kühlverfahren für ein hydraulisches Element des Kühlölkreislaufs 2 gemäß der vorliegenden Offenbarung auszuführen.

Fig. 2 zeigt den Kühlölkreislauf 2 aus Fig. 1 in einem Schaltbild.

Der Kühlölkreislauf 2 umfasst verschiedene hydraulische Elemente, die als Widerstände angesehen werden können, wie zum Beispiel $R_{H1}$ bis $R_{H7}$. Diese Widerstände sind Blenden oder Drosseln (oder idealisierte Mischformen aus Blenden und Drosseln) mit einer festen Öffnung (bspw. mit konstantem Querschnitt, sofern der Querschnitt kreisförmig ist), d.h. diese werden mit V=1 in der Ansatzfunktion beschrieben. (oder in manchen Ausführungsbeispielen eine idealisierte Mischform aus Blende und Drossel) mit einer festen Öffnung, d.h. diese werden mit V=1 in der Ansatzfunktion beschrieben.

Des Weiteren weist der Kühlölkreislauf 2 die hydraulischen Elemente $R_{HS1}$ bis $R_{HS4}$ auf.

$R_{HS1}$ stellt hierbei einen hydraulischen Widerstand einer Ölleitung zu der elektrischen Maschine dar (bspw. auch mit zusätzlichen hydraulischen Elementen, wie z.B. ein Kugelventil), die ebenfalls als fester hydraulischer Widerstand (V=1) angenommen wird.

Das Element $R_{HS2}$ symbolisiert ein Kühlölventil für eine Doppelkupplung. Das Element $R_{HS3}$ symbolisiert ein Restdruckventil. Das Element $R_{HS4}$ symbolisiert ein Kühlölventil.

Die Elemente $R_{HS2}$ bis $R_{HS4}$ stellen variable hydraulische Widerstände in dem Kühlölkreislauf dar, d.h. V der Ansatzfunktion wird zwischen Null und Eins angenommen.

Der Kühlölkreislauf 2 weist weiterhin eine Ölpumpe M auf, die einen Ölpumpendruck $P_P$ und einen Ölpumpenvolumenstrom $Q_P$ liefert. Die Ölpumpe M wird mit einem elektrischen Motor über eine Welle angetrieben.

Der Ölpumpenvolumenstrom $Q_P$ kann aus der Drehzahl der Pumpe M sowie aus der Öltemperatur und aus dem Druck $P_P$ der Pumpe M hergeleitet werden. Der Ölpumpendruck $P_P$ entspricht dem Gesamtdruck des Kühlölkreislaufs 2.

Wie bereits diskutiert, können Knoten und Maschen in dem Kühlölkreislauf definiert werden.

Angenommen, der Druck an dem Restdruckventil $R_{HS3}$ ist bekannt (d.h. das Restdruckventil ist offen), was dadurch festgestellt wird, dass der Ist-Volumenstrom der Ölpumpe größer ist als der Volumenstromschwellwert für die Ölpumpe. In dem Schaltbild des Kühlölkreislaufs 2 fließt dann ein Volumenstrom durch das Restdruckventil zurück zu der Ölpumpe M.

Dieser Volumenstrom kann dann mit der Ansatzfunktion berechnet werden. Außerdem können Knoten- und Maschengleichungen aufgestellt werden. Könnte der Volumenstrom nicht berechnet werden, wäre es nur möglich, Maschengleichungen aufzustellen. Knotengleichungen könnten selbstverständlich zwar aufgestellt werden, jedoch wäre kein Parameter bekannt, um diese zu lösen.

Eine Maschengleichung wäre beispielsweise, dass die Summe aller Drücke an den Widerständen $R_{H1}$, $R_{H3}$, $R_{H6}$, sowie an $R_{HS3}$, dem Gesamtdruck des Kühlölkreislaufs $Q_P$ entsprechen muss. Eine andere Maschengleichung wäre zum Beispiel, dass der Druck an dem Restdruckventil $R_{HS3}$ dem Druck an dem weiteren Kühlölventil $R_{HS4}$ entspricht.

Eine Knotengleichung für einen Knoten K wäre beispielsweise, dass der Volumenstrom durch $R_{H6}$, der in den Knoten einfließt, gleich dem ausfließenden Volumenstrom ist, also der durch $R_{HS3}$, $R_{HS4}$ und $R_{H7}$ fließt.

So können für jeden Knoten und für jede Masche eine Gleichung aufgestellt werden. Sobald ein Druck an einem hydraulischen Element bekannt ist, kann dieser mit Hilfe der Ansatzfunktion in einen entsprechenden Volumenstrom umgewandelt werden, und umgekehrt.

Ist der Druck an dem Restdruckventil $R_{HS3}$ zunächst nicht bekannt, sondern der Volumenstrom, ergeben sich jedoch andere Knoten- und Maschengleichungen, da kein Öl an die Ölpumpe M zurückgeführt wird. Die Leitung an dem Knoten K durch das Restdruckventil bis zu der Ölpumpe M wäre dann also blockiert.

Auf diese Weise kann ein Ist-Druck an einem hydraulischen Element des Kühlölkreislaufs 2 bestimmt werden.

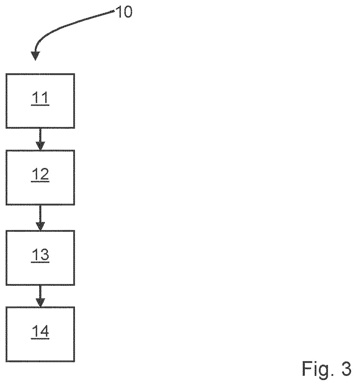

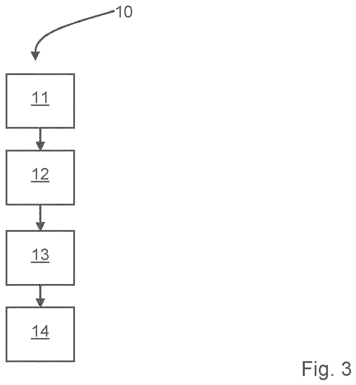

Fig. 3 zeigt ein Kühlverfahren 10 gemäß der vorliegenden Offenbarung in einem Blockdiagramm.

In 11 wird eine Druckanforderung eines hydraulischen Elements eines Kühlölkreislaufs ermittelt. In diesem Ausführungsbeispiel wird ein Volumenstromwunsch der Doppelkupplung in eine Druckanforderung mit Hilfe der Ansatzfunktion ermittelt, da die Doppelkupplung hier die oberste Priorität hat. Diese Druckanforderung wird bezogen auf das Restdruckventil.

In 12 wird ein Ist-Druck an dem Ventil für die Doppelkupplung und den hydraulischen Leitungen zur Doppelkupplung bestimmt. Hierbei ist nicht der Kupplungsdruck gemeint, wie er typischerweise in einem Hochdruck-Ölkreislauf auftritt und nicht in einem Kühlölkreislauf, sondern der Druck des Öls in dem Kühlölkreislauf. Der Ist-Druck wird mit Knoten- und Maschengleichungen basierend auf dem Zustand des Restdruckventils ermittelt, wie hierin beschrieben.

In 13 wird eine Zielfunktion bestimmt, die sich aus der Differenz zwischen Ist-Druck und Druckanforderung ergibt.

In 14 wird die Zielfunktion derart minimiert, dass sie in einem iterativen Verfahren gegen Null konvergiert.

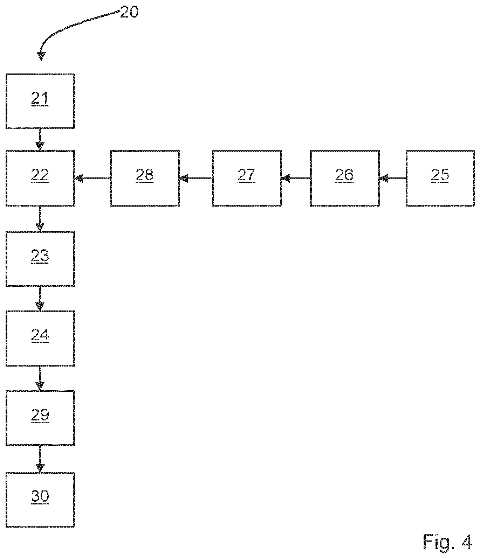

Fig. 4 zeigt ein weiteres Ausführungsbeispiel eines Kühlverfahrens 20 gemäß der vorliegenden Offenbarung in einem Blockdiagramm.

21 bis 24 entsprechen hier 11 bis 14 von Fig. 3. Um den Ist-Druck in 22 jedoch zu bestimmen, wird in 25 zunächst ein Volumenstromschwellwert für die Ölpumpe bestimmt.

Hierbei gehen Volumenstrombedarfe und Druckbedarfe von hydraulischen Elementen des Kühlölkreislaufs ein. Dies kann temperaturabhängig, leistungsabhängig, und dergleichen erfolgen. Beispielsweise kann eine Temperatur der Doppelkupplung indikativ für einen Volumenstrombedarf der Doppelkupplung sein, damit eine ausreichende Kühlung vorliegt. Je mehr Volumenstrombedarf das hydraulische Element hat, desto höher kann der theoretische Druckabfall an dem hydraulischen Element sein, sodass der Volumenstromschwellwert für die Ölpumpe je nach Volumenstrombedarfen oder Druckbedarfen variiert. Auch wenn das Restdruckventil immer bei dem gleichen Druck öffnet, kann dieser Druck also bei verschiedenen Volumenströmen der Ölpumpe erreicht werden, je nach Druck- oder Volumenstrombedarfen der Verbraucher.

In 26 wird ein Ist-Volumenstrom der Ölpumpe anhand der Drehzahl der Ölpumpe bestimmt.

In 27 wird der bestimmte Volumenstromschwellwert mit dem Ist-Volumenstrom verglichen, um den Zustand (offen oder geschlossen) des Restdruckventils zu bestimmen und somit um entweder einen Restdruckventildruck oder einen Restdruckventilvolumenstrom zu bestimmen.

In 28 wird anhand des in 27 bestimmten ersten Restdruckventilparameters ein zweiter Restdruckventilparameter mit Hilfe der hierin beschriebenen Ansatzfunktion bestimmt. D.h. entweder wird ein Restdruckventildruck in einen Restdruckventilvolumenstrom umgerechnet oder umgekehrt.

In 29 wird der Volumenstrom der Ölpumpe auf den Volumenstromschwellwert begrenzt, und in 30 wird die Ölpumpe derart angesteuert, dass wenigstens die Druckanforderung an dem hydraulischen Element erreicht wird.

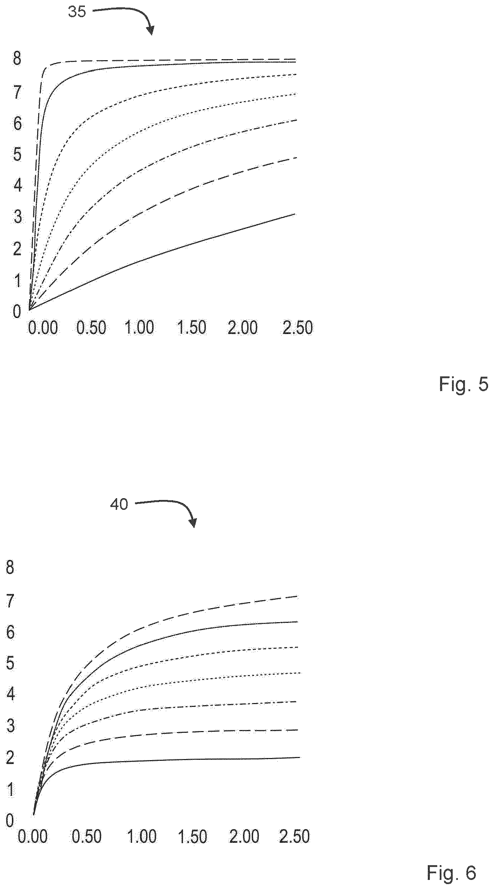

Fig. 5 zeigt einen Graphen 35 mit verschiedenen Simulationen für die Ansatzfunktion mit verschiedenen Werten für A.

Der Graph 35 zeigt einen Druck P auf der Abszisse, und einen Volumenstrom Q auf der Ordinate.

Der Wert für $Q_{Pol}$ ist für alle Simulationen als 8 l/min angenommen.

A liegt hier zwischen 0,5 und 2000. Für die dargestellten Kurven auf dem Graphen 35 sind die Werte für A von der untersten bis zur obersten Kurve 0,5, 2, 5, 10, 20, 50, 300, 2000.

Fig. 6 zeigt einen Graphen 40 mit verschiedenen Simulation für die Ansatzfunktion mit verschiedenen Werten für A.

Der Graph 40 zeigt einen Druck P auf der Abszisse, und einen Volumenstrom Q auf der Ordinate.

Der Wert für $Q_{Pol}$ ist für alle Simulationen als 8 l/min angenommen.

A liegt hier zwischen 1 und 8. Für die dargestellten Kurven auf dem Graphen 40 sind die Werte für A von der untersten bis zur obersten Kurve 1, 2, 3, 4, 5, 6, 7, 8.

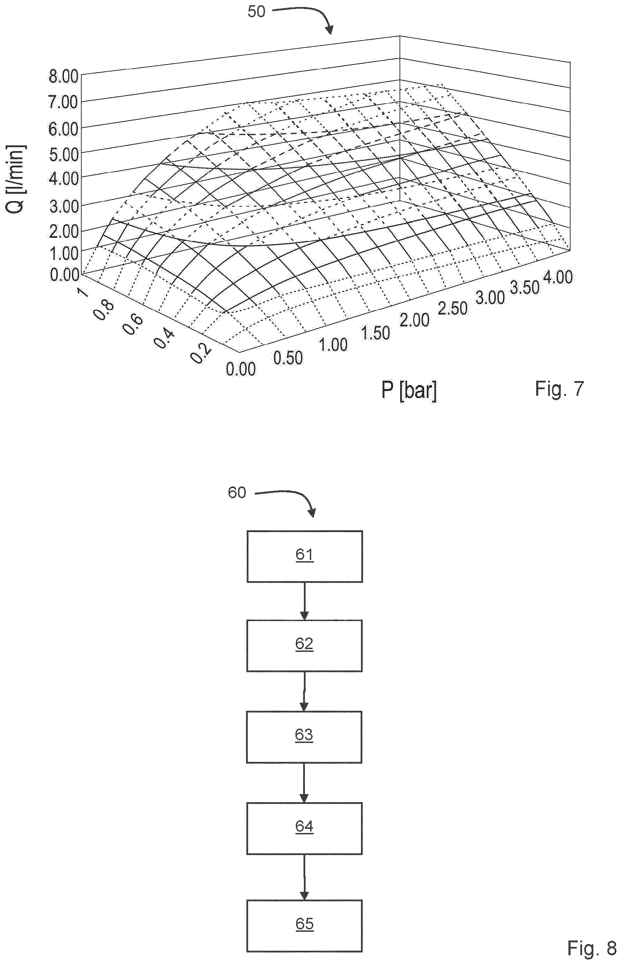

Fig. 7 zeigt eine weiteren Graphen 50 mit einer Simulation für verschiedene Werte von A in der Ansatzfunktion, wobei A kontinuierlich Werte zwischen Null und Acht aufweist, und wobei das Kühlölventil $R_{HS4}$ eine Temperatur von sechzig Grad Celsius aufweist.

Fig. 8 zeigt ein weiteres Ausführungsbeispiel eines Kühlverfahrens 60 gemäß der vorliegenden Offenbarung in einem Blockdiagramm.

In 61 werden als Eingangsgrößen Volumenstromanforderungen der hydraulischen Komponenten ermittelt. Diese Komponenten sind in diesem Ausführungsbeispiel das Kühlölventil der Doppelkupplung, das in dem Schaltbild von Fig. 2 als $R_{HS2}$ dargestellt ist, das Kühlölventil der Kupplung der elektrischen Maschine ($R_{HS4}$ in dem Schaltbild von Fig. 2), die elektrische Maschine, und der Räderkasten .

In 62 werden die Volumenstromanforderungen mit der Ansatzfunktion, wie hierin beschrieben, in Druckanforderungen umgerechnet. Hierfür sind in einem Steuergerät die notwendigen Parameter (bspw. A, V, und $Q_{Pol}$) bei einer Vielzahl von Betriebstemperaturen (also auch von Ölviskositäten) abgelegt, die in die Ansatzfunktion eingesetzt werden können.

Die jeweilige Druckanforderung entspricht hierbei einem gewünschten Mindestdruck vor dem jeweiligen hydraulischen Element. Ab diesem Mindestdruck fließt der angeforderte Volumenstrom durch das hydraulische Element.

Für $R_{HS2}$ wird dann die niedrigste Druckanforderung für ein voll geöffnetes Ventil ermittelt. Eine nachgeschaltete Regelung für das Kühlölventil $R_{HS2}$ ermittelt dann die erforderliche Ventilstellung, damit der Volumenstrom dann auch erreicht wird.

In 63 werden die Druckanforderungen aller hydraulischer Elemente auf einen gemeinsamen Bezugspunkt, nämlich auf das Restdruckventil $R_{HS3}$, bestimmt, wie hierin beschrieben. Hier wird für jedes hydraulische Element der Restdruck ermittelt, bei dem die Druckanforderung des Elements erreicht wird.

Somit wird für jedes hydraulische Element eine Zielfunktion für den Druck gebildet, wie hierin beschrieben, indem eine Differenz zwischen dem Ist-Druck und der Druckanforderung gebildet wird. Der Ist-Druck wird mit Knoten- und Maschengleichungen mit Hilfe der Ansatzfunktion bestimmt, wie hierin beschrieben.

Die Zielfunktion wird dann in einem Iterationsschritt eines Newton-Verfahrens minimiert. Des Weiteren wird eine maximale Restdruckanforderung bestimmt, d.h. welches hydraulische Element noch am meisten Restdruck benötigt.

Die maximale Restdruckanforderung wird in 64 auf den Volumenstromschwellwert begrenzt.

In 65 erhält man als Ausgangsgröße den erforderlichen Volumenstrom der Ölpumpe.

Generell ist die vorliegende Offenbarung nicht darauf beschränkt, in einem Kraftfahrzeug Anwendung zu finden, da jedes beliebige hydraulische Netzwerk auf eine Weise wie sie hier gezeigt ist, modelliert werden kann, bspw. Wasserversorgungsnetzwerke (von Wohnanlagen), Ölfördernetzwerke, und dergleichen. Des Weiteren kann die vorliegende Offenbarung auch in Wasserfahrzeugen, Luftfahrzeugen, und dergleichen Anwendung finden, sofern hydraulische Elemente vorgesehen sind, die gemäß der vorliegenden Offenbarung gekühlt werden können.

**Patentansprüche**

1. Kühlverfahren für ein hydraulisches Element eines Kühlölkreislaufs (2) eines Kraftfahrzeugs (1), wobei der Kühlölkreislauf (2) zum Kühlen einer elektrischen Maschine und eines Getriebes eingerichtet ist, wobei der Kühlölkreislauf (2) eine Ölpumpe (M) und ein Restdruckventil aufweist, und wobei die elektrische Maschine in das Getriebe einkoppelbar ist, das Kühlverfahren umfassend:

   Ermitteln (11; 21) einer Druckanforderung des hydraulischen Elements basierend auf einer Ansatzfunktion unter Berücksichtigung einer Volumenstromanforderung des hydraulischen Elements in Abhängigkeit eines Restdruckventilparameters;
   Bestimmen (12; 22) eines Ist-Drucks an dem hydraulischen Element in Abhängigkeit des Restdruckventilparameters;
   Bestimmen (13; 23) einer Zielfunktion basierend auf einer Differenz der Druckanforderung und des Ist-Drucks; und
   Minimieren (14; 24) der Zielfunktion derart, dass die Zielfunktion in einem iterativen Verfahren gegen Null konvergiert zum Bestimmen eines erforderlichen Volumenstroms der Ölpumpe zum Kühlen des hydraulischen Elements.

2. Kühlverfahren nach Anspruch 1, wobei die Ansatzfunktion das hydraulische Element des Kühlölkreislaufs (2) als nicht-linearen hydraulischen Widerstand beschreibt.

3. Kühlverfahren nach einem der vorherigen Ansprüche, ferner umfassend:

Steuern (30) der Ölpumpe (M) derart, dass wenigstens die Druckanforderung an dem hydraulischen Element erreicht wird.

4. Kühlverfahren nach einem der vorherigen Ansprüche, wobei das Kühlverfahren für das hydraulische Element abhängig von einer Priorität des hydraulischen Elements ausgeführt wird.

5. Kühlverfahren nach einem der vorherigen Ansprüche, ferner umfassend:

   Bestimmen (25) eines Volumenstromschwellwerts für die Ölpumpe (M);
   Bestimmen (26) eines Ist-Volumenstroms der Ölpumpe (M);
   Vergleichen (27) des Volumenstromschwellwerts mit dem Ist-Volumenstrom zum Ermitteln eines ersten Restdruckventilparameters; und
   Ermitteln (28) eines zweiten Restdruckventilparameters basierend auf der Ansatzfunktion unter Berücksichtigung des ersten Restdruckventilparameters zum Bestimmen des Ist-Drucks an dem hydraulischen Element.

6. Kühlverfahren nach Anspruch 5, ferner umfassend: Begrenzen (29; 64) des Volumenstroms der Ölpumpe auf den Volumenstromschwellwert.

7. Kühlverfahren nach einem der Ansprüche 5 und 6, wobei der erste Restdruckventilparameter eines von Restdruckventildruck oder Restdruckventilvolumenstrom umfasst.

8. Kühlverfahren nach Anspruch 7, wobei der zweite Restdruckventilparameter einen Restdruckventildruck umfasst, wenn der erste Restdruckventilparameter der Restdruckventilvolumenstrom ist, und wobei der zweite Restdruckventilparameter einen Restdruckvolumenstrom umfasst, wenn der erste Restdruckventilparameter der Restdruckventildruck ist.

9. Kühlverfahren nach einem der vorherigen Ansprüche, wobei das iterative Verfahren nach zwei Iterationen hinreichend genau ist.

10. Kühlverfahren nach einem der Ansprüche 1 oder 9, wobei das iterative Verfahren ein Gradientenverfahren umfasst.

11. Kühlverfahren nach einem der Ansprüche 9 und 10, wobei das iterative Verfahren wenigstens eines von Newtonverfahren und Sekantenverfahren umfasst.

12. Steuergerät für ein Kraftfahrzeug (1), das einen Kühlölkreislauf (2) aufweist zum Kühlen einer elektrischen Maschine und zum Kühlen eines Getriebes, wobei die elektrische Maschine in das Getriebe einkoppelbar ist, wobei das Steuergerät (3) dazu eingerichtet ist, ein Kühlverfahren nach einem der vorherigen Ansprüche auszuführen.

13. Kraftfahrzeug mit einem Kühlölkreislauf (2) zum Kühlen einer elektrischen Maschine und zum Kühlen eines Getriebes, wobei die elektrische Maschine in das Getriebe einkoppelbar ist, wobei das Kraftfahrzeug (1) ein Steuergerät (3) nach Anspruch 12 aufweist.

**Claims**

1. Cooling method for a hydraulic element of a cooling oil circuit (2) of a motor vehicle (1), wherein the cooling oil circuit (2) is designed to cool an electric machine and a transmission, wherein the cooling oil circuit (2) has an oil pump (M) and a residual pressure valve, and wherein the electric machine can be coupled into the transmission, the cooling method comprising:

    identifying (11; 21) a pressure request of the hydraulic element on the basis of an approximation function taking into account a volume flow request of the hydraulic element depending on a residual pressure valve parameter;
    determining (12; 22) an actual pressure on the hydraulic element depending on the residual pressure valve parameter;
    determining (13; 23) a target function on the basis of a difference in the pressure request and the actual pressure; and
    minimizing (14; 24) the target function such that the target function converges to zero in an iterative method for determining a required volume flow of the oil pump for cooling the hydraulic element.

2. Cooling method according to claim 1, wherein the approximation function describes the hydraulic element of the cooling oil circuit (2) as a non-linear hydraulic resistance.

3. Cooling method according to either of the preceding claims, further comprising:
controlling (30) the oil pump (M) such that at least the pressure requirement at the hydraulic element is achieved.

4. Cooling method according to any of the preceding claims, wherein the cooling method for the hydraulic element is carried out depending on a priority of the hydraulic element.

5. Cooling method according to any of the preceding claims, further comprising:

determining (25) a volume flow threshold value for the oil pump (M);
determining (26) an actual volume flow of the oil pump (M);
comparing (27) the volume flow threshold value to the actual volume flow to identify a first residual pressure valve parameter; and
identifying (28) a second residual pressure valve parameter on the basis of the approximation function taking into account the first residual pressure valve parameter to determine the actual pressure at the hydraulic element.

6. Cooling method according to claim 5, further comprising:
limiting (29; 64) the volume flow of the oil pump to the volume flow threshold value.

7. Cooling method according to either claim 5 or claim 6, wherein the first residual pressure valve parameter comprises one of a residual pressure valve pressure or residual pressure valve volume flow.

8. Cooling method according to claim 7, wherein the second residual pressure valve parameter comprises a residual pressure valve pressure when the first residual pressure valve parameter is the residual pressure valve volume flow, and wherein the second residual pressure valve parameter comprises a residual pressure volume flow when the first residual pressure valve parameter is the residual pressure valve pressure.

9. Cooling method according to any of the preceding claims, wherein the iterative method is sufficiently accurate after two iterations.

10. Cooling method according to either claim 1 or claim 9, wherein the iterative method comprises a gradient method.

11. Cooling method according to either claim 9 or claim 10, wherein the iterative method comprises at least one of a Newtonian method and secant method.

12. Control unit for a motor vehicle (1), which has a cooling oil circuit (2) for cooling an electric machine and for cooling a transmission, wherein the electric machine can be coupled into the transmission, wherein the control unit (3) is designed to carry out a cooling method according to any of the preceding claims.

13. Motor vehicle comprising a cooling oil circuit (2) for cooling an electric machine and for cooling a transmission, wherein the electric machine can be coupled into the transmission, wherein the motor vehicle (1) has a control unit (3) according to claim 12.

## Revendications

1. Procédé de refroidissement pour un élément hydraulique d'un circuit d'huile de refroidissement (2) d'un véhicule automobile (1), le circuit d'huile de refroidissement (2) étant conçu pour le refroidissement d'une machine électrique et d'un engrenage, le circuit d'huile de refroidissement (2) présentant une pompe à huile (M) et une vanne à pression résiduelle, et la machine électrique pouvant être couplée dans l'engrenage, le procédé de refroidissement comprenant :

   détermination (11 ; 21) d'une demande de pression de l'élément hydraulique, basée sur une fonction d'approche, en tenant compte d'une demande de débit volumique de l'élément hydraulique en fonction d'un paramètre de vanne à pression résiduelle ;
   détermination (12 ; 22) d'une pression réelle au niveau de l'élément hydraulique en fonction du paramètre de vanne à pression résiduelle ;
   détermination (13 ; 23) d'une fonction cible basée sur une différence entre la demande de pression et la pression réelle ; et
   minimisation (14 ; 24) de la fonction cible de sorte que la fonction cible converge vers zéro dans un processus itératif pour la détermination d'un débit volumique de la pompe à huile requis pour le refroidissement de l'élément hydraulique.

2. Procédé de refroidissement selon la revendication 1, dans lequel la fonction d'approche décrit l'élément hydraulique du circuit d'huile de refroidissement (2) comme une résistance hydraulique non linéaire.

3. Procédé de refroidissement selon l'une des revendications précédentes, comprenant en outre :
   la commande (30) de la pompe à huile (M) de sorte qu'au moins la demande de pression au niveau de l'élément hydraulique est atteinte.

4. Procédé de refroidissement selon l'une des revendications précédentes, dans lequel le procédé de refroidissement est exécuté pour l'élément hydraulique en fonction d'une priorité de l'élément hydraulique.

5. Procédé de refroidissement selon l'une des revendications précédentes, comprenant en outre :

   la détermination (25) d'une valeur seuil de débit volumique pour la pompe à huile (M) ;
   la détermination (26) d'une valeur réelle de débit volumique de la pompe à huile (M) ;
   la comparaison (27) de la valeur seuil de débit volumétrique au débit volumétrique réel pour la détermination d'un premier paramètre de vanne à pression résiduelle ; et
   la détermination (28) d'un second paramètre de vanne à pression résiduelle basé sur la fonction d'approche, en tenant compte du premier paramètre de vanne à pression résiduelle, pour la détermination de la pression réelle au niveau de l'élément hydraulique.

6. Procédé de refroidissement selon la revendication 5, comprenant en outre :
   la limitation (29 ; 64) du débit volumique de la pompe à huile à la valeur seuil de débit volumique.

7. Procédé de refroidissement selon l'une des revendications 5 et 6, dans lequel le premier paramètre de vanne à pression résiduelle comprend un d'une pression de vanne à pression résiduelle ou de débit volumique de vanne à pression résiduelle.

8. Procédé de refroidissement selon la revendication 7, dans lequel le second paramètre de vanne à pression résiduelle comprend une pression de vanne à pression résiduelle lorsque le premier paramètre de vanne à pression résiduelle est le débit volumique de pression résiduelle, et dans lequel le second paramètre de vanne à pression résiduelle comprend un débit volumique de pression résiduelle lorsque le premier paramètre de vanne à pression résiduelle est le débit volumique de pression résiduelle.

9. Procédé de refroidissement selon l'une des revendications précédentes, dans lequel le procédé itératif est suffisamment précis après deux itérations.

10. Procédé de refroidissement selon l'une des revendications 1 ou 9, dans lequel le procédé itératif comprend une méthode de gradient.

11. Procédé de refroidissement selon l'une des revendications 9 et 10, dans lequel le procédé itératif comprend au moins une d'une méthode de Newton et d'une méthode de la sécante.

12. Appareil de commande pour un véhicule automobile (1) qui présente un circuit d'huile de refroidissement (2) pour le refroidissement d'une machine électrique et pour le refroidissement d'un engrenage, dans lequel la machine électrique peut être couplée dans l'engrenage, dans lequel l'appareil de commande (3) est conçu pour exécuter un procédé de refroidissement selon l'une des revendications précédentes.

13. Véhicule automobile comprenant un circuit d'huile de refroidissement (2) pour le refroidissement d'une machine électrique et pour le refroidissement d'un engrenage, dans lequel la machine électrique peut être couplée dans l'engrenage, dans lequel le véhicule automobile (1) présente un appareil de commande (3) selon la revendication 12.

Fig. 1

Fig. 2

Fig. 3

Fig. 4

Fig. 5

Fig. 6

Fig. 7

Fig. 8

10

11

12

13

14

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015225649 A1
- EP 2053276 A2

- DE 112013003307 T5